Europäisches Patentamt

European Patent Office

Office européen des brevets

(19)

(11) Numéro de publication: **0 236 238**
**B1**

(12) **FASCICULE DE BREVET EUROPEEN**

(45) Date de publication du fascicule du brevet: **12.09.90**

(51) Int. Cl.⁵: **C 22 B 21/06, C 22 B 9/02**

(21) Numéro de dépôt: **87420001.7**

(22) Date de dépôt: **05.01.87**

(54) Procédé amélioré de purification de métaux par cristallisation fractionnée.

(30) Priorité: **06.01.86 FR 8600399**

(43) Date de publication de la demande:
**09.09.87 Bulletin 87/37**

(45) Mention de la délivrance du brevet:
**12.09.90 Bulletin 90/37**

(84) Etats contractants désignés:
**AT BE CH DE ES GB IT LI NL SE**

(56) Documents cités:
**EP-A-0 091 386**
**FR-A-1 594 154**
**FR-A-2 445 381**
**US-A-3 211 547**

**PATENT ABSTRACTS OF JAPAN, vol. 8, no. 184,
(C-239)1621r, 23 aou7t 1984, page 20 C 239; &
JP-A-59 76 837 (MITSUBISHI KEIKINZOKU
KOGYO K.K.) 02-05-1984**

(73) Titulaire: **ALUMINIUM PECHINEY
23, rue Balzac
F-75008 Paris Cédex 08 (FR)**

(72) Inventeur: **Raymond-Seraille, André
6, cité La Vexane Auzat
F-09220 Vicdessos (FR)**

(74) Mandataire: **Vanlaer, Marcel et al
PECHINEY 28, rue de Bonnel
F-69433 Lyon Cédex 3 (FR)**

# EP 0 236 238 B1

**Description**

La présente invention est relative à une amélioration du procédé de purification de métaux, en particulier de l'aluminium, par cristallisation fractionnée, objet du brevet français 1 594 154, en vue d'augmenter l'efficacité de la purification.

L'homme de l'art sait que lors de la solidification d'un alliage, un élément susceptible de former un eutectique avec le métal de base et présent dans l'alliage en quantité inférieure à la teneur eutectique se concentre dans la phase liquide de sorte que les cristaux qui se forment initialement sont plus purs en cet élément que l'alliage de départ. Ceci est encore vrai si l'élément est une impureté même présente à l'état de traces.

Théoriquement, la concentration $C_S$ de l'impureté dans le cristal qui se forme est égale à k $C_L$ où $C_L$ est la concentration de l'impureté dans le liquide et k le coefficient de partage solide-liquide donné par le diagramme d'équilibre.

Ainsi, le coefficient de purification $\tau$ du cristal est-il égal à

$$\frac{C_L}{C_S} = \frac{1}{k}.$$

C'est à partir de ce principe qu'on été développés différents procédés de purification des métaux par cristallisation fractionnée parmi lesquels on peut citer notamment celui qui a fait l'objet du brevet français 1 594 154 et qui consiste principalement à:

a) Provoquer une solidification progressive au sein d'un volume de métal liquide, maintenu au voisinage de son point de fusion dans un récipient chauffé extérieurement, en y plongeant un corps refroidi intérieurement, la vitesse de solidification étant réglée par l'action combinée du débit de fluide froid de la puissance de chauffage extérieure au creuset et de l'isolation thermique du creuset;

b) A rassembler, au fond du récipient contenant le métal liquide, l'ensemble des petits cristaux qui se forment;

c) A provoquer par tassement au fond du récipient au moyen d'un piston le frittage des petits cristaux pour obtenir de gros cristaux et chasser le liquide interstitiel impur;

d) A séparer la fraction purifiée à gros cristaux de la fraction liquide qui s'est enrichie, par exemple, en basculant le récipient pour évacuer la fraction enrichie en impuretes, lorsqu'elle est encore liquide, et qui constitue le liquide surnageant.

Comme cela a été montré expérimentalement et figure dans le tableau dudit brevet, on obtient des taux de purification plus élevés que le coefficient théorique $\tau$. En effet, pour le fer et le silicium $k_{Fe}=0,03$ et $k_{Si}=0,15$, ce qui donne $\tau_{Fe}=30$ et $\tau_{Si}=7$, alors que l'on observe des coefficients de purification réels: $\eta_{Fe}=55$ et $\eta_{Si}=15,5$.

Ce résultat est très surprenant surtout si on tient compte qu'il porte sur 50% de la masse initiale et donc que la cristallisation s'est produite à partir d'un liquide qui s'enrichit progressivement en impuretés.

Des études théoriques et expérimentales ont donné une explication plausible de ce phénomène:

Les petits cristaux qui tombent sur la masse déjà purifiée, formée de gros cristaux, s'amassent sur celle-ci à l'état d'une couche composée desdits petits cristaux et de leur liquide mère. Mais, ces derniers, ne sont plus en équilibre avec la liqueur mère car, comme la température dans le récipient augmente du haut (partie refroidie) vers le bas qui est chauffé, ils se trouvent alors à une température supérieure à celle à laquelle ils se sont formés. Le mélange des petits cristaux et de la liqueur mère tend alors à se remettre à l'équilibre thermodynamique. Comme il a été dit dans le revue de l'Aluminium de Mai 1974, p. 290 et dans les comptes-rendus de l'Académie des Sciences (t 272, p. 369, série C, 1971) cette remise à l'équilibre se produit par des phénomènes de refusion et de resolidification et on obtient finalement:

— des cristaux qui s'agglomèrent aux gros cristaux déjà existants et qui ont la composition donnée par le solidus du diagramme à la température locale.

Ils sont donc plus purs que les petits cristaux initiaux. On explique ainsi la plus grande purification expérimentalement constatée;

— une quantité plus grande de liquide car une partie des petits cristaux initiaux a fondu pour rétablir l'equilibre thermodynamique. Ledit liquide est refoulé vers le liquide surnageant par l'effet combiné de l'agglomération des petits cristaux aux gros cristaux et de l'action du piston.

En résumé, on obtient ainsi progressivement une masse pratiquement compacte et solide de gros cristaux agglomérés dont la composition est celle du solidus à la température à laquelle ils se trouvent.

Les analyses ponctuelles (1 µm×µm) effectuées à la microsonde électronique, après solidification du lingot, au voisinage de la transition gros cristaux-métal liquide sont en accord avec l'explication développée ci-dessus.

Néanmoins, si on explore par la même méthode l'intérieur de la masse purifiée, on observe également qu'il reste des résidus de liquide interstitiel dans la masse purifiée, résidus dont la présence se manifeste par une élévation brutale de la concentration en impuretés. Ce liquide interstitiel en équilibre thermodynamique avec des gros cristaux est moins pur que ceux-ci

2

# EP 0 236 238 B1

$$(C_L = \frac{C_s}{k})$$

et diminue donc l'efficacité de la purification.

A titre d'exemple, cet effet est particulièrement intense pour le fer puisque le liquide interstitiel est environ 30 fois moins pur que les cristaux.

La demanderesse a donc cherché à éliminer ce liquide disséminé dans la masse de gros cristaux sans toutefois refondre le solide purifié pour ne pas diminuer le rendement de l'opération.

De nombreux essais ont été effectués dans ce but. Comme il est écrit dans le brevet français 1 594 154, p. 2, 1. 36, on a essayé de modifier la vitesse de cristallisation dans le sens d'une diminution. On a également augmenté la pression du piston sur la masse de cristaux purifiés. Puis après avoir éliminé la fraction impure par les moyens indiqués dans le brevet, on a replacé la masse purifiée dans son creuset et réchauffé l'ensemble, ce qui a conduit à un ressemblement de liquide impur au fond du récipient.

Cependant, aucun de ces procédés n'apporte de purification substantielle bien que le dernier se soit révélé relativement efficace mais, à condition de refondre une fraction importante de la masse purifiée, ce qui confirme le bien fondé de l'enseignement de l'USP 3 211 547.

Finalement, la demanderesse en est arrivée au moyen de l'invention qui, dans le cadre du brevet 1 594 154, et afin d'éliminer le liquide interstitiel et d'augmenter ainsi la purification du métal obtenu, est caractérisé en ce que après avoir basculé le récipient pour séparer le liquide surnageant, on maintient le récipient dans la position basculée pour égoutter la fraction purifiée jusqu'à cessation de tout écoulement et que pendant l'égouttage, on apporte dans la fraction purifiée des calories en quantité juste suffisante pour compenser les pertes thermiques.

La demanderesse a en effet constaté que dans la position basculée du liquide suintait très lentement et pendant très longtemps de la masse purifiée.

En raison de cette lenteur, une fraction du liquide interstitiel peut se solidifier. C'est pourquoi, pendant l'égouttage on apporte à la masse de cristaux des calories en quantité juste suffisante pour compenser les pertes thermiques. Ceci n'a pas pour but de refondre la masse purifiée, ce qui diminuerait le rendement, mais, seulement d'empêcher le liquide interstitiel de se solidifier et de réduire ainsi l'efficacité de l'opération d'égouttage.

Cet apport de calories peut être réalisé par tout moyen connu et de façon continue ou discontinue.

De préférence, cette opération d'égouttage dure entre 5 minutes et 1 heure environ.

Il a été vérifié que le liquide d'égouttage était beaucoup moins pur que la masse purifiée. Un examen après refroidissement de la masse purifiée a montré que celle-ci présentait une fine porosité attestant ainsi que le liquide qui suinte est en réalité du liquide interstitiel et donc que la fine porosité est au moins en grande partie une porosité communicante ou ouverte qui permet au liquide intersititel de sortir de la masse purifiée quasi-compacte.

Comme le montrent les exemples d'application ci-après, il est très surprenant d'obtenir simplement par égouttage et sans refusion une élimination aussi importante du liquide interstitiel. L'égouttage par basculement tel qu'il est pratiqué présente l'avantage d'éliminer le liquide interstitiel en commençant par la partie la plus impure et cela sans lui faire traverser les régions où le métal est le plus pur. Ce résultat ne serait pas obtenu si cet égouttage se faisait, sans basculement, par le fond du creuset.

D'autre part, la demanderesse a également remarqué que la proportion de liquide interstitiel dans la masse purifiée augmente du bas vers le haut du récipient, de sorte que le basculement du creuset est donc favorable à une bonne élimination du liquide interstitiel.

Pendant l'égouttage, on peut également utiliser le piston destiné au tassage afin d'exercer sur la masse purifiée une pression qui facilite l'expulsion du liquide interstitiel et cette action peut être exercée également de façon continue ou discontinue.

L'apport de calories et l'exercise d'une pression de façon simultanée contribuent à améliorer davantage l'efficacité du procédé.

L'invention peut être illustrée à l'aide des exemples d'applications suivants:

On a prélevé dans un bain d'aluminium 4 fractions de 1 tonne chacune ayant des compositions très voisines que l'on a soumises séparément à des opérations de purification par cristallisation fractionnée suivant les modes opératoires suivants:

Essai 1: suivant l'art antérieur avec une durée de solidification de 8 heures.

Essai 2: suivant l'art antérieur avec une durée de solidification de 16 heures et une pression accrue du piston.

Essai 3: suivant essai 1, en pratiquant un égouttage de 45 minutes selon l'invention et sans apport de calories.

Essai 4: suivant essai 3, avec un apport de calories pour compenser les pertes thermiques et en exerçant une pression continue sur la fraction purifiée durant toute la période d'égouttage.

Ces résultats figurent dans le tableau suivant où les sigles:

— Fe(0) et Si(0) représentent en ppm les teneurs initiales du bain, respectivement en fer et en silicium,

— Fe(1) et Si(1) les teneurs finales moyennes en ppm respectivement en fer et en silicium de la masse de métal purifié.

3

## EP 0 236 238 B1

— $\eta$ Fe et $\eta$ Si les rapports des teneurs initiales aux teneurs finales respectivement en fer et en silicium,
— $\rho$ le rendement massique: masse de métal purifié/masse de métal initial en %.

TABLEAU

| N° Essai | Fe(0) | Fe(1) | $\eta$ Fe | Si(0) | Si(1) | $\eta$ Si | $\rho$ |
|----------|-------|-------|-----------|-------|-------|-----------|--------|
| 1 | 839 | 13 | 65 | 258 | 23 | 11 | 64,3 |
| 2 | 795 | 10 | 80 | 276 | 20 | 14 | 65,3 |
| 3 | 768 | 2 | 384 | 223 | 11 | 20 | 58,6 |
| 4 | 804 | 1 | 804 | 316 | 7 | 45 | 53,7 |

On constate que pour le Fer par simple égouttage sans apport de calories (essai 3) la concentration est plus de 6 fois inférieure à ce qu'elle était avec l'art antérieur (essai 1). Pour le silicium, la purification est moins efficace mais néanmoins la concentration est divisée environ par 2.

Avec une compensation des pertes thermiques et l'exercice d'une pression (essai 4) le résultat est encore nettement meilleur puisque toujours par rapport à l'art antérieur (essai 1) la concentration en fer est divisée par 13 et celle en silicium par plus de 3.

Le rendement massique $\rho$ diminue relativement peu puisqu'il passe de 64% avec l'art antérieur à environ 59% par simple égouttage et à près de 54% dans l'essai 4.

On voit d'après l'essai 2 que le doublement du temps de solidification apporte peu d'amélioration.

Dans les 4 essais, l'opération se terminait par refroidissement du récipient et sciage pour éliminer la partie supérieure de la masse purifiée à gros cristaux souillée par des restes de liquide surnageant à la fin de l'opération de tassement et le sciage de la partie purifiée a toujours été fait à la même hauteur du lingot.

Donc les essais 3 et 4, le rendement massique $\rho$ plus faible est dû à l'élimination du liquide interstitiel qui laisse une porosité dans la masse purifiée.

Ainsi, la présente invention constitue donc un très net progrès par rapport à l'art antérieur.

### Revendications

1. Procédé amélioré de purification des métaux, en particulier de l'aluminium, par cristallisation fractionnée qui consiste:

a) à provoquer une solidification progressive au sein d'un volume de métal liquide, maintenu au voisinage de son point de fusion dans un récipient chauffé extérieurement, en y plongeant un corps refroidi intérieurement, la vitesse de solification étant réglée par l'action combinée du débit de fluide froid de la puissance de chauffage extérieure au creuset et de l'isolation thermique du creuset;

b) à rassembler, au fond du récipient contenant le métal liquide, l'ensemble des petits cristaux qui se forment;

c) à provoquer par tassement au fond du récipient au moyen d'un piston le frittage de petits cristaux pour obtenir de gros cristaux.

d) à séparer la fraction purifiée à gros cristaux de la fraction liquide qui s'est enrichie en impuretés en basculant récipient pour évacuer la fraction enrichie en impuretés lorsqu'elle est encore liquide et qui constitue le liquide surnageant,

caractérisé en ce que pour augmenter la purification, on maintient le récipient dans sa position basculée pour égouter la fraction purifiée jusqu'à cessation de tout écoulement et que pendant l'égouttage on apporte dans la fraction purifiée des calories en quantité juste suffisante pour compenser les pertes thermiques.

2. Procédé selon la revendication 1, caractérisé en ce que la durée d'égouttage est comprise entre 5 minutes et 1 heure.

3. Procédé selon la revendication 1 caractérisé en ce que l'on exerce une pression sur la fraction purifiée pendant l'égouttage.

4. Procédé selon les revendications 2 et 3 caractérisé en ce que l'on introduit des calories et tasse simultanément.

### Patentansprüche

1. Verbessertes Verfahren zur Reinigung der Metalle, insbesondere des Aluminiums, durch fraktionierte Kristallisation, das darin besteht:

a) eine fortschreitende Erstarrung im Inneren eines Volumens von flüssigem Metall, das in einem äußerlich geheizten Behälter in der Nähe seines Schmelzpunkts gehalten wird, zu bewirken, indem ein innerlich gekühlter Körper darin eingetaucht wird, wobei die Erstarrungsgeschwindigkeit durch die

4

kombinierte Wirkung des Durchsatzes von kaltem Fluid, der Heizleistung außerhalb des Tiegels und der Wärmeisolation des Tiegels reguliert wird;

b) am Boden des das flüssige Metall enthaltenden Behälters die Gesamtheit der kleinen Kristalle, die sich bilden, zu sammeln;

c) durch Zusammendrücken am Boden des Behälters mittels eines Kolbens das Fritten kleiner Kristalle zwecks Erhaltens großer Kristalle zu bewirken; und

d) den gereinigten Anteil mit großen Kristallen vom flüssigen Anteil, der sich an Verunreinigungen angereichert hat, zu trennen, indem der Behälter gekippt wird, um den an Verunreinigungen angereicherten Anteil zu entleeren, wenn er noch flüssig ist und der die überstehende Flüssigkeit bildet;

dadurch gekennzeichnet, daß man zur Steigerung der Reinigung den Behälter in seiner gekippten Lage zum Abtropfen des gereinigten Anteils bis zum Aufhöhren jedes Abfließens hält und daß man während des Abtropfens in den gereinigten Anteil Wärme in einer zur Kompensation der Wärmeverluste gerade ausreichenden Menge einführt.

2. Verfahren nach dem Anspruch 1, dadurch gekennzeichnet, daß die Abtropfdauer im Bereich von 5 Minuten bis 1 Stunde ist.

3. Verfahren nach dem Anspruch 1, dadurch gekennzeichnet, daß man während des Abtropfens einen Druck auf den gereinigten Anteil ausübt.

4. Verfahren nach den Ansprüchen 2 und 3, dadurch gekennzeichnet, daß man gleichzeitig Wärme einführt und zusammendrückt.

## Claims

1. An improved process for the purification of metals, in particular aluminium, by fractional crystallisation which comprises:

a) causing progressive solidification within a volume of liquid metal which is maintained in the vicinity of its melting point in an externally heated container by immersing therein an internally cooled body, the rate of solidification being regulated by the combined action of the flow of cold fluid, the power of the heating effect which is external to the crucible, and the thermal insulation of the crucible;

b) collecting all the small crystals which are formed, in the bottom of the container containing the liquid metal;

c) by compacting at the bottom of the container by means of a piston, causing sintering of the small crystals to produce large crystals; and

d) separating the purified fraction comprising large crystals from the liquid fraction which is enriched in respect of impurities by tilting the container to discharge the fraction which is enriched in respect of impurities when it is still liquid and which constitutes the supernatant liquid,

characterised in that in order to increase the purification action the container is maintained in its tilted position to drain off the purified fraction until all discharge flow ceases and that during the drainage operation heat is applied to the purified fraction, in an amount just sufficient to compensate for the heat losses.

2. A process according to claim 1 characterised in that the drainage period is between 5 minutes and 1 hour.

3. A process according to claim 1 characterised in that a pressure is applied to the purified fraction during the drainage operation.

4. A process according to claim 2 and claim 3 characterised in that heat is applied and compacting is effected simultaneously.